# EUROPEAN PATENT SPECIFICATION

(11) **EP 0 531 137 B1**
(45) Date of publication and mention of the grant of the patent: **05.02.1997**
(21) Application number: 92308011.3
(22) Date of filing: 03.09.1992
(51) Int. Cl.: F16K 7/06, F16K 11/02

(54) **Method and apparatus for controlling the flow of fluids**
Verfahren und Vorrichtung zum Steuern ein Flüssigkeitsströmung
Procédé et dispositif pour régler l'écoulement de fluide

(30) Priority: 03.09.1991 JP 250353/91; 28.07.1992 JP 220617/92
(43) Date of publication of application: 10.03.1993
(73) Proprietor: Kawabe, Ryu, Tama-shi, Tokyo 206 (JP)
(72) Inventor: Kawabe, Ryu, Tama-shi, Tokyo 206 (JP)
(74) Representative: Maury, Richard Philip

(56) References cited:
- DE-A- 845 292
- DE-A- 955 750
- DE-A- 3 107 352
- DE-U- 8 714 457
- FR-A- 619 098
- US-A- 3 102 710
- US-A- 3 744 524
- US-A- 3 918 490

## Description

The present invention relates generally to a flow rate controller, and more particularly to a method of and an apparatus for controlling the flow rate of a fluid by compressing a resiliently deformable fluid path portion or releasing it from the compression.

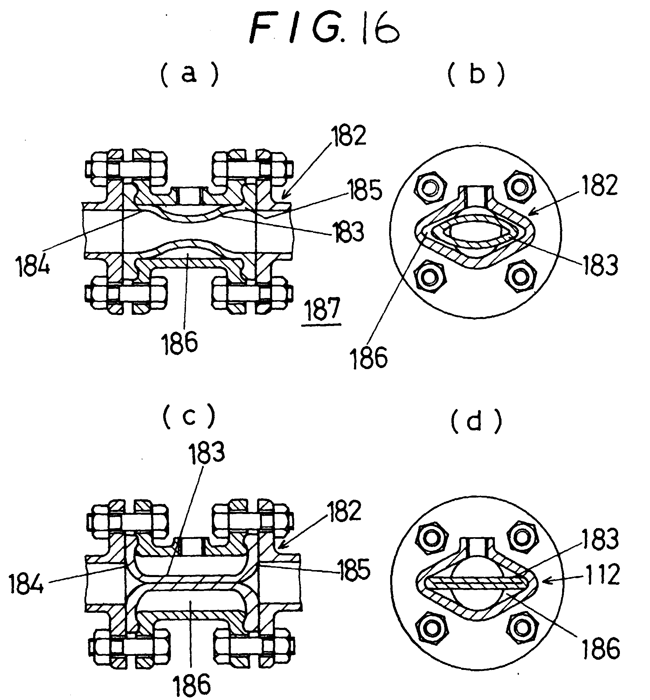

As shown in Fig. 16 (a) and (b), a typical flow rate controller that is known to the relevant art, generally designated by 187, includes a fluid path 182 inside which a resiliently deformable sleeve 183, or simply a resilient sleeve, is mounted. In this construction, the resilient sleeve 183 has the peripheral marginal edges 184, 185 on the opposite sides thereof rigidly fixed to the inner wall of the fluid path 182, with a hollow space 186 formed between the inner wall of the fluid path 182 and the resilient sleeve 183. The flow rate of a fluid may be controlled by increasing or decreasing the pressure to be applied to the hollow space 186 to thereby vary the shape in cross section of the resilient sleeve 183.

According to the flow rate controller as described above, the fluid path 182 is completely closed by compressing the resilient sleeve 183 under the pneumatic pressure applied thereto, as shown in Fig. 16 (c) and (d). This may disadvantageously cause fluid leaks or escapes through the compressed fluid path. Particularly, when the fluid flows under high pressures, more leaks or escapes may occur. Furthermore, when the resilient sleeve 183 is place in its intermediate (half open) state between the fully opened state and fully closed state when the fluid flows under the high pressures (Fig. 16 (a) and (b)), the resilient sleeve 183 may suffer small vibrations which cause the fluid to flow therethrough at varying rates.

US-A-3102710 discloses a valve with an elastomer sleeve pinched by counter-rotation of a pair of cylindrical rollers having cylindrical recesses for accommodating the unpinched sleeve; this valve has the features defined in the precharacterizing portion of Claim 1. The recess in each roller is concave in a transverse plane, leaving two sharp edges for engaging the sleeve wall to commence pinching.

We also acknowledge that US-A-3918490 discloses an elongate rotary cylindrical cam member formed with a flat, for variably pinching a pair of fluid tubes at different times, in order to switch fluid flow. FR-A-619098 discloses the use of an eccentric cylinder in this context. DE-A-3107352 and US-A-3744524 disclose arrangements in which a cylinder roller swings on an arm eccentrically about a parallel axis, for the same purpose. DE-U-8714457 discloses a simple rotary pinch valve in which a pinch roller cam of "D" section is arranged adjacent one or two fluid tubes to pinch them selectively against a housing block. Similarly, an eccentric cam roller pinches selectively two sleeves in the valve disclosed in DE-U-845292.
The invention provides apparatus as defined in Claim 1, and a method as defined in Claim 8.

According to the method and apparatus of the invention, there is no risk that the resilient tube held between the roller and the abutment surface will vibrate even if fluid flows at high velocity. Thus, the rate of fluid flow can be controlled accurately. When the tube is to be closed fully, the outer wall of the pinch roller can securely hold and press upon the resilient portion of tube to close it completely, even under high pressure.

The present invention will become clearer from the detailed description of several preferred embodiments that will follow by reference to the accompanying drawings, in which:
Fig. 1 illustrates a roller in one preferred embodiment of the present invention, as well as the states in which the indexing motion of the roller occurs, in which Fig. 1 (a) is a front view of the roller, and Figs. 1 (b) through (g) show respective sectional views of the roller taken along the line A-A in Fig. 1 (a), when the roller are in the different states after it has rotated successively through every specific angle in the clockwise direction;
Fig. 2 (a) is a longitudinal cross-section view of the roller arrangement in Fig. 1, and Fig. 2 (b) is a sectional view of the roller arrangement taken along the line B-B in Fig. 2 (a);
Fig. 3 shows a sectional views of the roller arrangement in Fig. 2 that have rotated through every specific angle, in which Fig. 3 (a) shows that the resilient fluid path portion opens fully, Fig. 3 (b) shows that the resilient fluid path porion opens half, and Fig. 3 (c) shows that the resilient fluid path portion closes fully;
Fig. 4 shows the cross section of the rollers in the states shown in Fig. 3, in which Fig. 4 (a) is a sectional view taken along the line C-C in Fig. 3 (a), Fig. 4 (b) is a sectional view taken along the line D-D in Fig. 3 (b), and Fig. 4 (c) is a sectional view taken along the line E-E in Fig. 3 (c);
Fig. 5 is a sectional view of a roller arrangement in another embodiment;
Fig. 6 shows the mounting of the rollers, in which Fig. 6 (a) is a perspective view, Fig. 6 (b) is a longitudinal section view, and Fig. 6 (c) is a transversal section view;

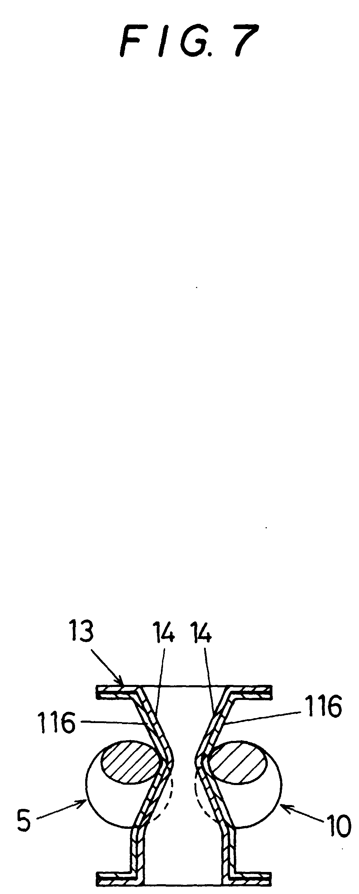

Fig. 7 is a sectional view of another embodiment including an intermediate film coating between the rollers and the resilient fluid path;
Fig. 8 shows another variation of the rollers including respective peripheral guide tracks, in which Fig. 8 (a) a perspective view, and Figs. 8 (b) through (d) are longitudinal cross sections of the rollers that have rotated through the different specific angles;
Figs. 9 (a) through (d) are front views of variations of the roller arrangement each including different peripheral guide tracks other than those shown in Fig. 8;
Fig. 10 illustrates a roller in another preferred embodiment, in which Fig. 10 (a) is a front view, Fig. 10 (b) is a sectional view taken along the line F-F in Fig. 10 (a), and Fig. 10 (c) is a longitudinal cross-section view of the roller arrangement in this embodiment;
Fig. 11 illustrates a roller in a further preferred embodiment, as well as the states in the indexing motion of the roller occurs, in which Fig. 11 (a) is a front view, and Figs. 11 (b) through (d) are sectional views taken along the line G-G through the line K-K in Fig. 11 (a) when the roller is in the different states after it has rotated through every 120° angle;
Fig. 12 illustrates the roller arrangement according to Fig. 11 that provides the fluid filtering functions, in which Fig. 12 (a) shows the filtering process, Fig. 12 (b) shows the backward cleaning process, and Fig. 12 (c) shows the forward cleaning process;
Fig. 13 shows a longitudinal cross section of a roller arrangement in another preferred embodiment when the rollers are in the different states, in which Fig. 13 (a) shows that the rollers are at the reference angle, and Fig. 13 (b) shows that the rollers have rotated through 180°;
Fig. 14 shows a section of a roller arrangement in another preferred embodiment when the rollers are in the different states, in which Fig. 14 (a) shows that the rollers are at the reference angle, and Fig. 14 (b) shows that the rollers have rotated through a particular angle;
Fig. 15 shows different variation of the embodiment, in which Fig. 15 (a) is a plan view of one variation, Fig. 15 (b) is a side elevation of the same, and Fig. 15 (c) is s plan view of another variation; and
Figs. 16 (a) and (c) represent sectional views of the typical prior art roller arrangement, in which Fig. 16 (b) corresponds to Fig. 16 (a), showing a longitudinal section view, and Fig. 16 (d) corresponds to Fig. 16 (c), showing a longitudinal section view.

### DESCRIPTION OF THE PREFERRED EMBODIMENTS

### EXAMPLE 1

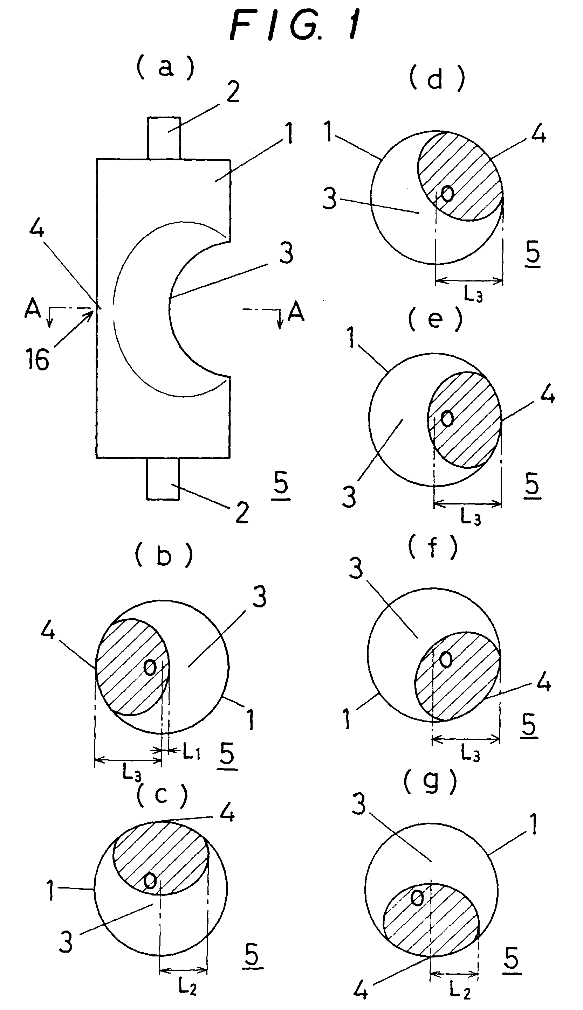

Referring first to Figs. 1 through 5, a first preferred embodiment of the present invention is described.

A roller assembly, generally designated by 5, includes a roller 1 having a cylindrical form, and a central shaft 2 passing through the roller 1. The roller 1 has a cutout portion 3 formed centrally on one lateral side thereof and an engaging portion 4 on the opposite lateral side. See Fig. 1 (a) and (b).

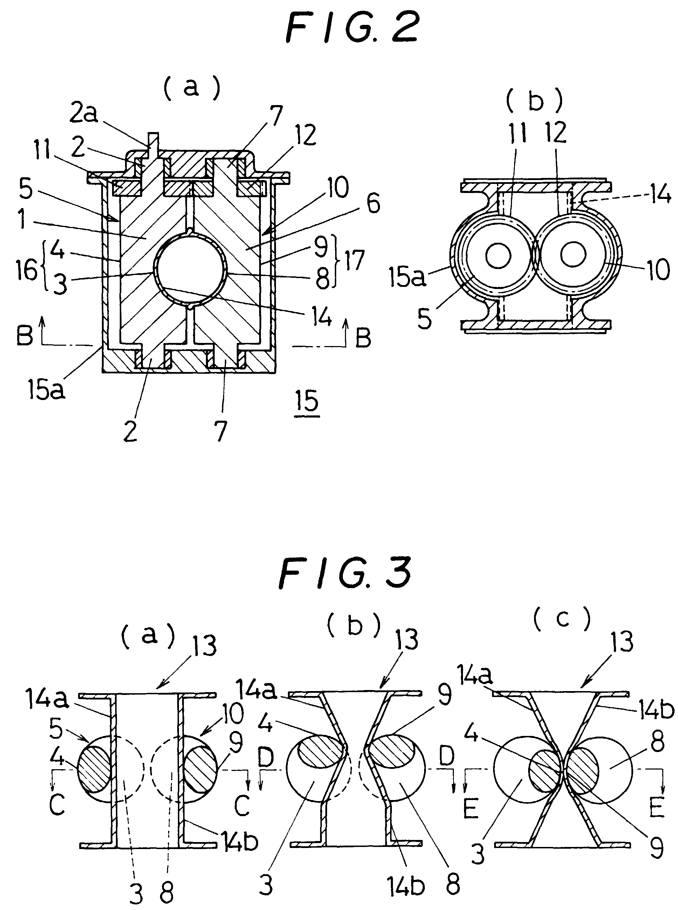

Similarly, another roller assembly, generally designated by 10, includes a roller 6 having a cylindrical form, and a central shaft 7 passing through the roller 6. The roller 6 has a cutout portion 8 formed centrally on one lateral side thereof and an engaging portion 9 on the opposite lateral side. This is not shown in Fig. 1. Instead, it may be seen from Fig. 2. The roller assemblies 5 and 10 are symmetrical, and are operatively linked together.

A casing 15a houses the roller assemblies 5, 10 whose respective shafts 2, 7 are rotatably mounted to the casing 15a such that the roller assemblies are arranged in parallel and face opposite each other with a spacing therebetween. Each of the shafts 2, 7 has a gear 11, 12 rigidly fixed to one end thereof. Those gears 11, 12 mesh with each other. The shafts 2, 7 are rotatably supported at both ends by the casing 15a. For example, the shaft 2 has an extension 2a on one side thereof, which projects out of the casing 15a. This extension 2a composes an operating part and may be coupled with an operating handle (not shown). A fluid path 13 that has a hollow cylindrical form includes a resiliently deformable portion 14 (or simply a resilient portion ) which is inserted between the central cutout portions 3, 8 of the roller assemblies 5, 10. The roller assemblies 5, 10 and the resilient portion 14 together form a fluid controller 15 (Fig. 2). When the roller 5 and/or 10 is referred to hereinafter, it should be understood to include the respective roller assembly, unless othewise specified.

It may be seen from Fig. 1 (b) that the roller 5 has the cross section as shown when it engages the resilient portion 14 of the fluid path 13. In the figure, the symbol "O" is the point of center in the central cutout portion of the roller 5, about which the roller 5 rotates clockwise. When the roller 5 is in the state shown in Fig. 1 (b), the distance from the center point "O" to the outer wall of the roller 5 on the side engaging the resilient portion 14 of the fluid path 13 may be represented by L1. Fig. 1 (c) indicates the state of the roller 5 that has rotated clockwise through an angle of 90°, beginning with the state shown in Fig. 1 (b). In the state shown in Fig. 1 (c), the distance from the center point "O" to the outer wall of the roller 5 on the side engaging the resilient portion 14 of the fluid path 13 may be represented by L2. In the state shown in Fig. 1 (d), the distance from the center point "O" to the outer wall of the roller 5 on the side engaging the resilient portion 14 of the fluid path 13 may be represented by L3. L3 is equal to the radius of the roller 5. When the roller 5 is rotated clockwise further until it reaches the state shown in Fig. 1 (f), beginning with the state shown in Fig. 1 (d), the distance from the center point "0" to the outer wall of the roller 5 on the side engaging the resilient portion 14 of the fluid path 13 remains unchanged, namely, "L3". Thus, when the roller 5 is between the states (d) and (f) in Fig. 1, the resilient portion 14 of the fluid path 13 continues to be pressed upon most strongly by the roller 5. Fig. 1 (e) and Fig. 1 (g) indicate the states of the roller 5 that has rotated clockwise through 180° and 270°, respectively, beginning with the state (b) in Fig. 1.

It may be seen from Fig. 1 that any part of the outer wall of the central cutout portion 3 of the roller 5 always engages the resilient portion 14 of the fluid path 13 while the roller 5 is rotating through every angle that corresponds to every state shown in Fig. 1. Therefore, when the roller 5 has completed one revolution, every part of the outer wall of the central cutout portion 3 of the roller 5 have engaged the resilient portion 14 at least one time. It is noted that the resilient portion 14 of the fluid path 13 may have any size such as diameter, which is not restricted to that shown in this embodiment. For example, the resilient portion 14 of the fluid path 13 may have a little smaller diameter. In this case, there may be some parts of the outer wall of the central cutout portion of the roller 5 that do not engage the resilient portion 14 of the fluid path 13, when the roller 5 have rotated through one complete revolution. On the contrary, if the cutout portion is formed bigger than that shown in this embodiment, there may be some parts of the outer wall of the central cutout portion of the roller 5 that do not engage the resilient portion 14 of the fluid path 13, when the roller 5 have rotated through one complete revolution as same as the before mentioned case.

As described, the side of the roller 5 opposite the cutout portion will be referred to as the "engaging portion".

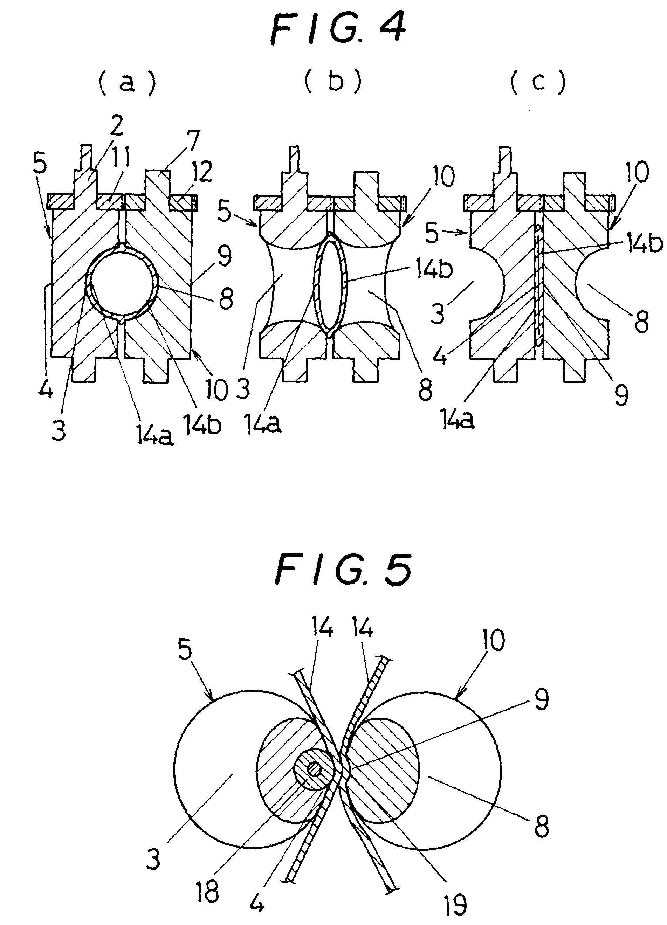

The angle of rotation of the roller 5 which is shown in Fig. 2 (a), Fig. 3 (a) and Fig. 4 (a) will be referred to as the reference angle relative to all other possible angles. When the two rollers are at the reference angle with the center points aligned as shown in Fig. 2 (a), Fig. 3 (a) and Fig. 4 (a), the cutout portions 3, 8 on the rollers 5, 10 face opposite each other so that the resilient portion 14 of the fluid path 13 retains its original shape, that is, the round shape in cross section (fully opened state). When the rollers rotate through 180°, beginning with the state of the reference angle, the resilient portion 14 will be held between the engaging portions 4, 9 of the rollers 5, 10 so that the opposite lateral sides 14a, 14b of the resilient portion 14 facing the engaging portions 4, 9 are pressed upon completely (fully closed state) as shown in Fig. 3 (c) and Fig. 4 (c). In this state, the fluid cannot flow through the resilient portion 14. The shapes of the cutout portions 3, 8 and the gap between the two rollers 5, 10 may be determined by considering the design and size of the resilient portion 14 of the fluid path 13 so that the resilient portion 14 can be controlled to maintain the above states.

The part of the roller 5 consisting of the cutout portion 3 and engaging portion 4 provides a control part 16, and the part of the roller 10 consisting of the cutout portion 8 and engaging portion 9 provides a control part 17.

The operation of the fluid flow controller 15 described above is described below.

When the operating part 2a on the roller 5 is rotated, which usually occurs by operating the handle (not shown) associated with the operating part 2a, the gear 11 on the roller 5 is rotated, causing the gear 12 in mesh with the gear 11 to rotate oppositely which causes the roller 10 to rotate. Thus, the rollers 5, 10 rotate at the same speed but in the opposite directions.

When the fluid path 13 is to be opened fully, the handle (not shown) is operated to rotate the operating part 2a on the roller 5, which causes the rollers 5, 10 to rotate by means of the gears 11 and 12, so the rollers 5, 10 are placed at the reference angle (Fig. 3 (a), Fig. 4 (a)).

Conversely, when the fluid path 13 is to be closed fully, the handle (not shown) is operated so that the operating part 2a on the roller, which causes the rollers 5, 10 to rotate by means of the gears 11 and 12, so the rollers 5, 10 are rotated through 180°, beginning with the reference angle (Fig. 3 (c), Fig. 4 (c)).

When the fluid path 13 is to be opened half, the handle (not shown) is operated until the operating part 2a on the roller 5 is rotated to the intermediate state between the fully open state (reference angle) and the fully close state (180°). In this intermediate state, the shape in cross section of the resilient portion 14 is varied to allow the fluid to flow through the fluid path 13 at the appropriate rate. Then, the handle is stopped in its rest position. In this case, the resilient portion 14 of the fluid path 13 is firmly held between the engaging portions 4, 9 of the rollers 5, 10. Thus, there is no risk that the resilient portion 14 will vibrate even when the fluid flows at the high velocity.

This embodiment may be varied so that the engaging portion 4 on the roller 5 includes a smaller-diameter roller 18 as shown in fig. 5. In this embodiment the engaging portion 9 on the roller 10 may include a recess 19 formed arcuately having a diameter greater than the small roller 18 by the thickness of the resilient portion 14 as shown in Fig. 5. In this variation, when the fluid path 13 is to be closed fully, the resilient portion 14 may be held between the small roller 18 and the recess 19. This provides the improved sealing effect (see Fig. 5). This variation may advantageously be used with the fluid under the high pressures. This variation may be varied further so that the engaging portions 4, 9 on both rollers 5, 10 include smaller rollers, respectively. This may reduce the friction between the engaging portions 4, 9 and the outer wall of the resilient portion 14, protecting the resilient portion 14 againt any possible wear caused by the friction. This is not shown.

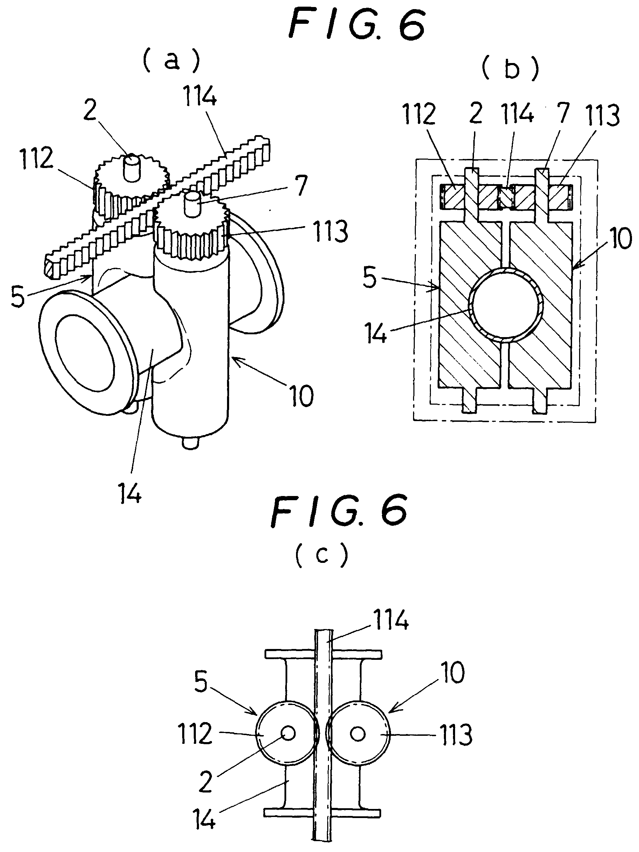

In the embodiment described so far, the operating handle (not shown) is associated with the operating part 2a of the roller 5, and the roller 5 may be rotated by the operating handle. This mechanical link may be replaced by the rack and pinion mechanism wherein pinions 112, 113 may be mounted to the upper end of the shaft 2 supporting the roller 5 and to the upper end of the shaft 7 supporting the roller 10, respectively, and a rack 114 may be mounted between the pinions 112, 113, the rack 114 having teeth on the opposite sides thereof engaging the corresponding pinions 112, 113 (Fig. 6 (a), (b), (c)). The pinions 112, 113 may be mounted to the lower ends of the respective shafts 2, 7, but this is not shown. In alternative forms, the shaft supporting the operating part 2a may be coupled with the automatic rotation controller, or the rack 114 may be coupled with the automatic motion controller. In either way, the rollers 5, 10 may be rotated automatically. This is not shown.

In the embodiment described so far, the roller assembly 5 includes the cylindrical roller 1 having the control part 16 that consists of the cutout 3 and engaging portion 4.

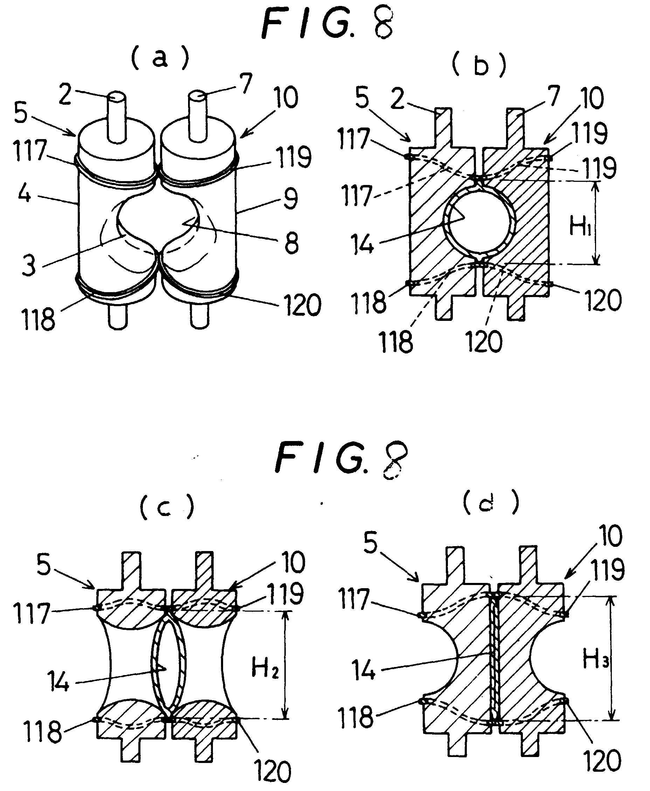

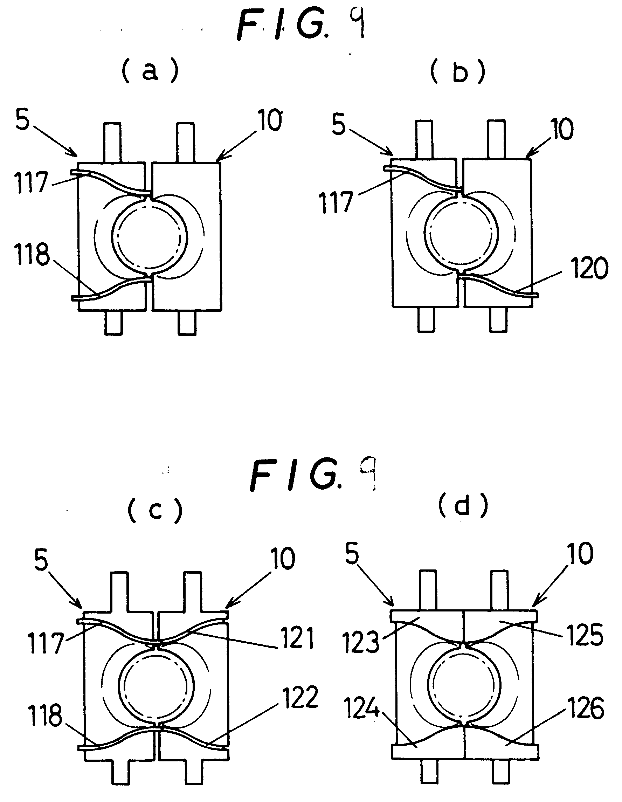

A variation of the embodiment described so far may be provided. In this variation as shown in Fig. 8, peripheral guide tracks 117, 118 and 119, 120 may be formed around the rollers 5 and 10 above and below the cutout 3, 8 and engaging portion 4, 9 thereof, respectively. Those guide tracks 117, 118 and 119, 120 are formed around the outer wall of respective rollers and always engage the outer peripheral wall of the resilient fluid path portion so that they can follow any variation in the shape in cross section of the resilient portion that occurs when the rollers rotate. Fig. 8 (a) shows the guide tracks are provided on both rollers 5, 10. The distance H beween the guide tracks 117 and 118 is varied in accordance with the variation in the shape in cross section of the resilient portion such that it corresponds to the height H₁ when the fluid path is opened fully (Fig. 8 (b)), the height H₂ when the fluid path is opened half (Fig. 8 (c)), and the height H₃ when the fluid path is closed fully (Fig. 8 (d)).

As it may be undestood from the above, those guide tracks can follow the variations in the shape in cross section of the resilient portion 14 that occur from the fully closed state to the fully opened state as the rollers are rotating, and ensure that the resilient portion can have the appropriate variations in the shape in cross section when the shape in cross section of the resilient portion is varied by rotating of the rollers.

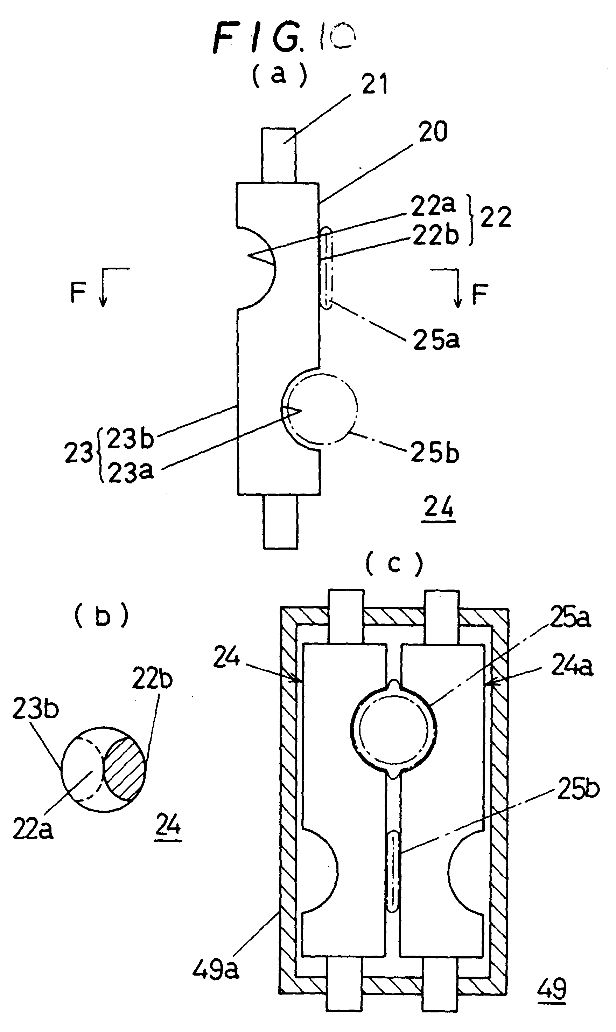

As described, the guide tracks are formed around both rollers respectively, but may be provided on either of them, such as the guide tracks 117, 118 on the roller 5 as shown in Fig. 9 (a). It is possible that only the guide track 117 is provided on the roller 5, and only the guide track 120 is provided on the roller 10. It is also possible that the guide tracks 117, 118 are provided on the roller 5, and the corresponding recesses 121, 122 that engage the guide tracks 117, 118 are provided on the roller 10 (Fig. 9 (c)). The roller 5 may include the diametrically enlarged portions 123, 124 on the upper and lower sides which are formed to provide the same configurations as the corresponding guide tracks 117, 118 shown in Fig. 8 (a). Similarly, the roller 10 may also be formed to include the diametrically enlarged portions 125, 126 (Fig. 9 (d)).

### EXAMPLE 2

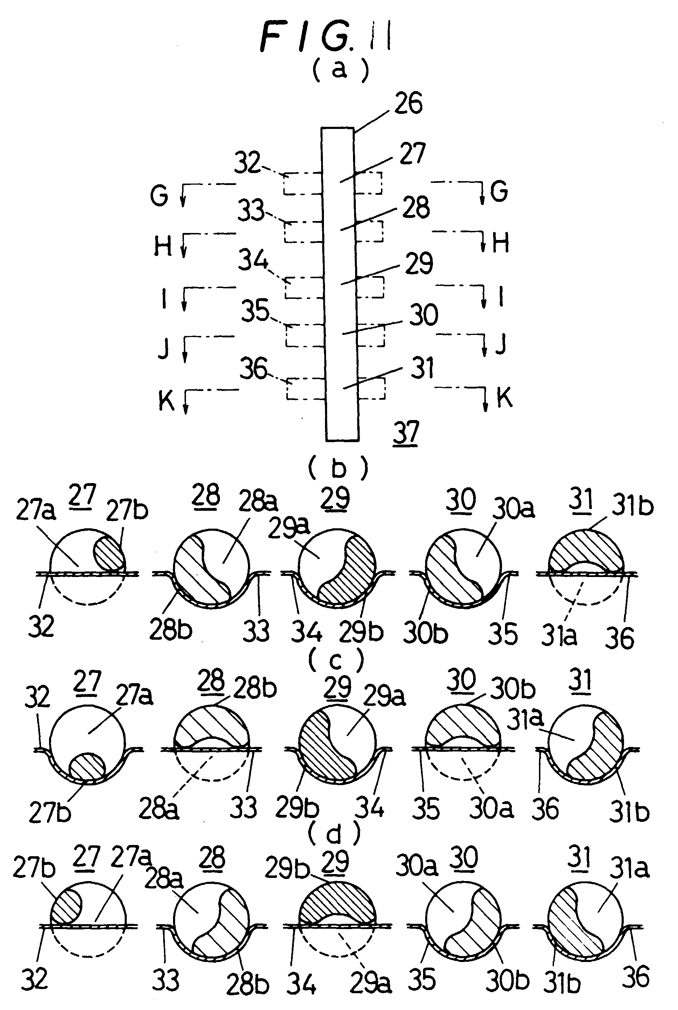

Referring next to Figs. 10 through 12, another preferred embodiment of the present invention is described.

In the preceding embodiment (EXAMPLE 1), one roller has one control part. In the embodiment shown in Figs. 10 through 12, a roller assembly 24 includes a roller 20 and a shaft 21 supporting the roller 20 wherein two control parts 22, 23 are provided. The control part 22 includes a cutout 22a on one side, and an engaging portion 22b on the other side. Similarly, the control part 23 includes a cutout 23a on one side, and an engaging portion 23b on the other side. This may be seen from Fig. 10 (a) and (b). A roller assembly 24a is similar to the roller assembly 24, and has a symmetrical surface. Those roller assemblies 24, 24a are supported rotatably within a casing 49a, and hold two fluid paths 25a, 25b therebetween. Thus, the flow rate controller 49 is provided as in the previous embodiment (Fig. 10 (c)).

The flow rate controller 49 may be used for controlling the flow rates of the fluids through the corresponding fluid paths 25a, 25b in the same manner as for the flow rate controller in the previous embodiment (EXAMPLE 1). As briefly described, when the roller assembly, or simply the roller 24, is assumed to be at the angle of 0° as shown in Fig. 10 (c), the resilient portion of the fluid path 25a is held between the cutout 22a on the roller 24 and the corresponding cutout on the opposite roller 24a. In this state, the resilient portion of the fluid path 25a is opened fully, as shown in Fig. 10 (c). At the same time, the resilient portion of the fluid path 25b is held between the engaging portion 23b on the roller 24 and the corresponding engaging portion on the opposite roller 24a, and the resilient portion of the fluid path 25b is closed fully as shown in Fig. 10 (c). Then, when the roller 24 rotates through 180° as shown in Fig. 10 (a), the resilient portion of the fluid path 25a is held between the engaging portion 22b on the roller 24 and the corresponding engaging portion on the opposite roller 24a, so the resilient portion of the fluid path 25a is closed fully. At the same time, the resilient portion of the fluid path 25b is held between the cutout 23a on the roller 24 and the corresponding cutout on the opposite roller 24a, so the resilient portion of the fluid path 25b is opened fully. In this way, the two control parts on the single roller 24 can control the flow rates of the two fluids through the fluid paths 25a and 25b.

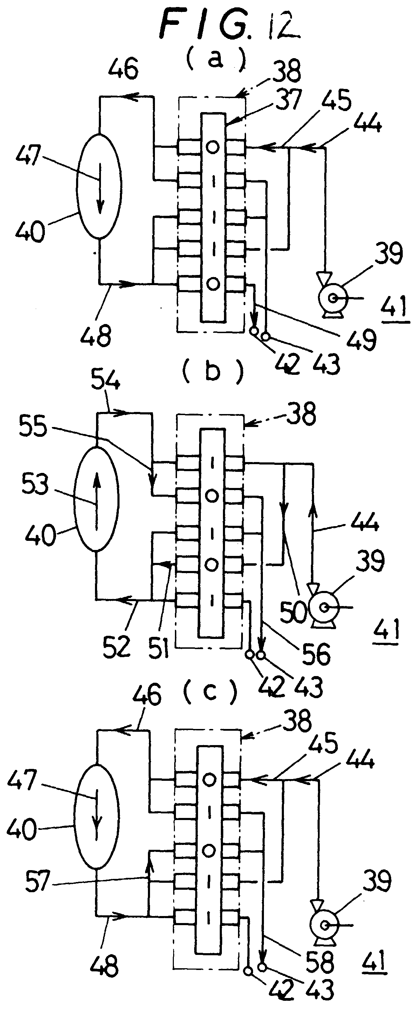

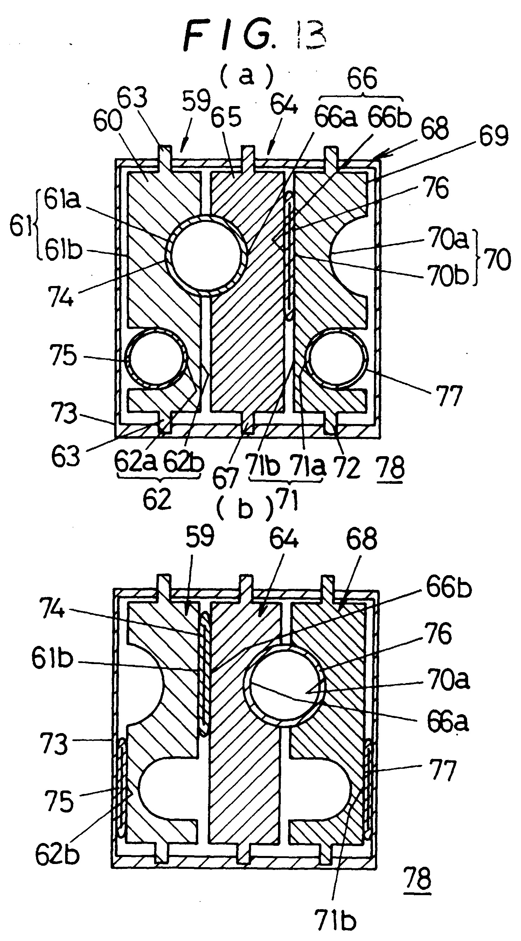

The following example is the case where the roller has a number of control parts. Specifically, the flow rate controller includes a roller that has five control parts, and may be used as the fluid filtering apparatus as shown in Fig. 11. This roller arrangement is described below with an aid of Fig. 11 and Fig. 12.

A first roller assembly, generally designated by 37 includes a cylindrical roller 26 that has five control parts 27 through 31. Each of the control parts 27-31 has a respective one of the cutout 27a-31a on one side thereof, and has a respective one of the engaging portions 27b-31b.

A second roller assembly, not shown, that is provided opposite the first roller assembly 37 has the identical and symmetrical roller arrangement. Each of the resilient portions 32 through 36 of the fluid path is held between the corresponding one of the control parts 27-31 on the first roller 37 and the corresponding one of the control parts on the second roller (not shown). The first and second roller assemblies constitute the flow rate controller 38.

The flow rate controller 38 operates in the manner that it controls the flow rates of the fluids through the resilient portions 32-36 of the fluid path by rotating the first roller 37 and the second roller through the angles of 0° ("X" position), 120° ("Y" position) and 240° ("Z" position) to enable each of the control parts 27-31 to act upon each corresponding one of the resilient portions, thereby varying the shape in cross section of each corresponding one of the resilient portions so the flow rates of the fluids through the resilient portions 32-36 can be controlled. When the roller 37 is at the angle of 0° ("X" position), the state for each of the control parts 27-31 is shown in cross section in Fig. 11 (b). In the "X" position, the control parts 27 and 31 enable the corresponding resilient portions 32, 36 to be opened fully, through which the respective fluids can flow, whereas the remaining control parts 28, 29, 30 enable the corresponding resilient portions 33, 34, 35 to be closed fully, through which the respective fluids cannot flow. Then, when the roller 37 rotates further through 120° ("Y" position), the state for each of the control parts 27-31 is shown in cross section in Fig. 11 (c). In the "Y" position, the control parts 28 and 30 enable the corresponding resilient portions 33, 35 to be opened fully, through which the respective fluids can flow, whereas the remaining control parts 27, 29, 31 enable the corresponding resilient portions 32, 34, 36 to be closed fully, through which the respective fluids cannot flow. When the roller 37 rotates further through 120° (a total of 240°) ("Z" position), the state for each of the control parts 27-31 is shown in cross section in Fig. 11 (d). In the "Z" position, the control parts 27 and 29 enable the corresponding resilient portions 32, 34 to be opened fully, through which the respective fluids can flow, whereas the remaining control parts 28, 30, 31 enable the corresponding resilient portions 33, 35, 36 to be closed fully, through which the respective fluids cannot flow.

Each of the control parts 27 - 31 has a cutout that cooperates with the respective engaging portion for controlling the flow rate of the fluid through the respective resilient portion by opening or closing it fully, when the roller is at the angles of 0° ("X" position), 120° ("Y" position), and 240° ("Z" position).

In the flow rate controller 38, the roller 26 in the first roller assembly 37 and the roller in the second first roller assembly (not shown) which is symmetrical to the first roller assembly 37 are supported by the respective stationary shafts which are fixed in their respective positions each time the rollers rotates to the "X", "Y" and "Z" positions.

As shown in Fig. 12 (a), the fluid filtering apparatus 41 may be constructed by coupling a pump 39 and a filtering tank 40 with the flow rate controller 38 by means of a fluid path or conduit. In the schematic diagram shown in Fig. 12, 42 designates a processed fluid outlet port, and 43 designates a liquid cleaner outlet port.

When the flow rate controller 38 is in the filtering process ("X" position) as shown in Fig. 12 (a), a fluid to be filtered is delivered from the pump 39 into the fluid rate controller 38 as indicated by arrows 44, 45, from which the fluid is delivered to the filtering tank 40 as indicated by an arrow 46, through which the fluid is filtered as indicated by an arrow 47. The filtered fluid is then fed back to the flow rate controller 38 again as indicated by an arrow 48, from which it goes out through the processed fluid outlet port 42 as indicated by an arrow 49.

When the flow rate controller 38 is in the backward cleaning process ("Y" position) as shown in Fig. 12 (b), the liquid cleaner is delivered from the pump 39 into the flow rate controller 38 as indicated by arrows 44, 50, from which the liquid cleaner is delivered to the filtering tank 40 as indicated by arrows 51, 52 where the interior of the the filtering tank 40 is cleaned as indicated by an arrow 53. The liquid cleaner goes back into the flow rate controller 38 as indicated by arrows 54, 55, from which it goes out through the outlet port 43 as indicated by an arrow 56.

When the flow rate controller 38 is in the foward cleaning process ("Z" position) as shown in Fig. 12 (c), the liquid cleaner is delivered from the pump 39 into the flow rate controller 38 as indicated by arrows 44, 45, from which the liquid cleaner is delivered to the filtering tank 40 as indicated by an arrow 46 where the filtering tank 40 is cleaned as indicated by an arrow 47. The liquid cleaner goes back into the flow rate controller 38 as indicated by arrows 48, 57, from which it goes out through the outlet port 43 as indicated by an arrow 58.

The above processes may be repeated for the fluid next to be filtered, upon completion of the forward cleaning process.

### EXAMPLE 3

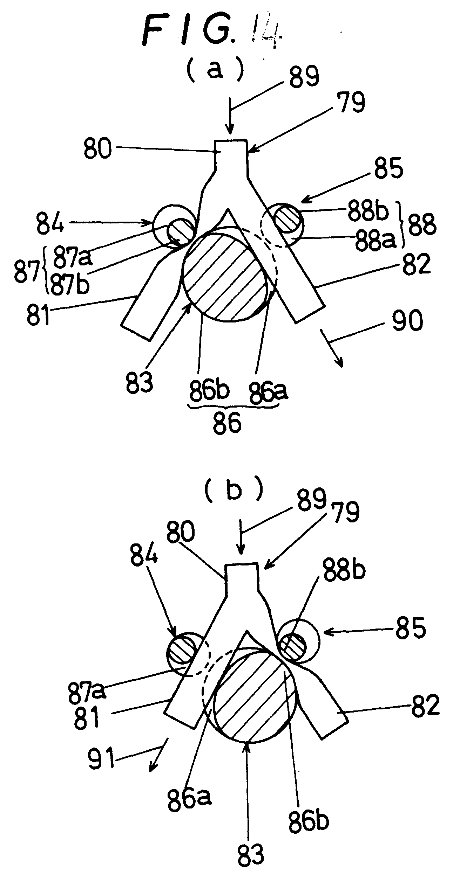

Referring now to Fig. 13 another preferred embodiment of the present invention is described. According to this embodiment, three rollers are provided, and the resilient portion of the fluid path is held not only between the two rollers but also between the inner wall of the supporting casing and the roller.

A first roller assembly 59 includes a cylindrical roller 60 having control parts 61, 62. A second roller assembly 64 includes a cylindrical roller 65 having a control part 66. A third roller assembly 68 includes a cylindrical roller 69 having two control parts 70, 71. The control part 61 includes a cutout 61a and an engaging portion 61b. The control part 62 includes a cutout 62a and an engaging portion 62b. The control part 66 includes a cutout 66a and an engaging portion 66b. The control part 70 includes a cutout 70a and an engaging portion 70b. Finally, the control part 71 includes a cutout 71a and an engaging portion 71b.

A casing 73 houses the roller assemblies 59, 64, 68 whose respective rollers 60, 65, 69 are rotatably supported by their respective shafts 63, 67, 72, respectively, which in turn are rotatably mounted at their respective opposite ends to the casing. The resilient portions 74, 75, 76 of the fluid paths are engaged by those rollers. Those three roller assemblies described above constitute a flow rate controller 78 which is shown in Fig. 13 (a).

The operation of the flow rate controller 78 is described according to the embodiment shown in Fig. 13.

In the reference position (0°), the resilient portion 74 of the fluid path is located inside the cutouts 61a and 66a facing opposite each other, so it is in its fully opened state. The resilient portion 75 is located inside the cutout 62a, so it is also in its fully opened state. The resilient portion 76 is pressed against by the engaging porions 66b and 70b, so it is in its fully closed state. The resilient portion 77 is located inside the cutout 71a, so it is in its fully opened state. Those states are shown in Fig. 13 (a).

When the rollers are rotated through 180°, starting with the reference angle, i.e., 0°, the resilient portion 74 is pressed against by the engaging portions 61b and 66b, so it is in its fully closed state. The resilient portion 75 is pressed against by the engaging portion 62b and the inner wall of the casing 73, so it is in its fully closed state. The resilient portion 76 is located inside the cutouts 66a and 70a, so it is in its fully opened state. The resilient portion 77 is pressed against by the engaging portion 71b and the inner wall of the casing 73, so it is in its fully closed state. Those states are shown in Fig. 13 (b).

### EXAMPLE 4

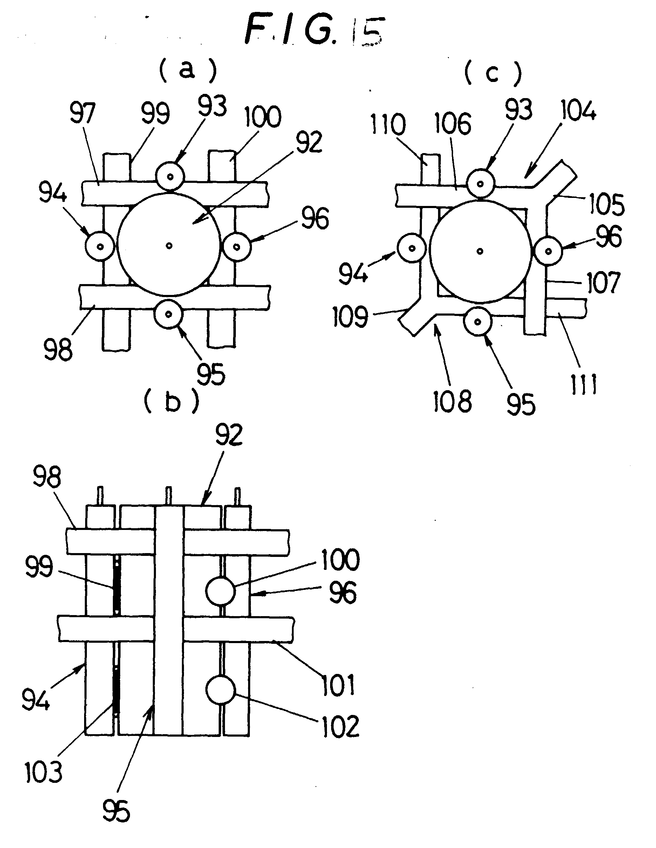

Referring next to Fig. 14, another preferred embodiment of the present invention is described. The flow rate controller according to this embodiment may be applied to the fluid path that includes a three-way (Y) resilient portion 79 consisting of three branches 80, 81 and 82. The branch 81 of the Y-resilient portion 79 is held between a larger roller 83 and a smaller roller 84, and the branch 82 is held between the larger roller 83 and a smaller roller 85. The larger roller 83 has a control part 86 including a cutout 86a and an engaging portion 86b, and the smaller roller 84 has a control part 87 including a cutout 87a and an engaging portion 87b. The smaller roller 85 has a control part 88 including a cutout 88a and an engaging portion 88b.

In the reference position (0°) as shown in Fig. 14 (a), the branch 81 is held between the engaging portions 86a and 87b, so it is in its fully closed state. The branch 82 is located inside the cutouts 86a and 88a, so it is in its fully opened state. Thus, the flow of the fluid from the branch 80 is directed to the branch 82 as indicated by arrows 89, 90 (Fig. 14 (a)).

In different positions (in which the smaller rollers 84, 85 have rotated through 180°, and the larger roller 83 has rotated through about 60°) as shown in Fig. 14 (b), the branch 81 is located inside the cutouts 86a and 87a, so it is in its fully opened state; the branch 82 is held between the engaging portions 86b and 88b, so it is in its fully closed state. Thus, the flow of the fluid from the branch 80 is directed to the branch 81 as indicated by arrows 89, 91 (Fig. 14 (b)).

### EXAMPLE 5

Reffering next to Fig. 15, a further preferred embodiment of the present invention is described. The flow rate controller according to this embodiment may be applied to a multi-way valve, wherein more than three rollers are provided for controlling the flow rates of more than four fluid paths.

The embodiment shown in Fig. 15 (a) and (b) includes one larger roller 92 and four smaller rollers 93, 94, 95, 96. The resilient portion 97 of the fluid path is controlled by the combination of the larger roller 92 and smaller roller 93, the resilient portions 98, 101 are controlled by the combination of the larger roller 92 and smaller roller 95, the resilient portions 99, 103 are controlled by the combination of the larger roller 92 and smaller roller 94, and the resilient portions 100, 102 are controlled by the larger roller 92 and smaller roller 96. Each roller has a control part including a cutout and an engaging portion.

Fig. 15 (c) illustrates a variation of the embodiment shown in Fig. 15 (a) and (b) which includes a three-way (Y) resilient portion 104 consists of branches 105, 106, and 107, and a three-way (Y) resilient portion 108 consists of branches 109, 110, and 111. The two resilient portions are controlled by the combination of a single larger roller 92 and smaller rollers 93, 94, 95, 96. Each roller has a control part including a cutout and an engaging portion.

Although the present invention has been described in connection with the preferred embodiments thereof, it should be undestood that various changes and modifications may be made without departing from the scope of the invention as defined in the appended claims.

## Claims

1. Apparatus for controlling the rate of fluid flow through a conduit (68, 80, 142), comprising a resiliently deformable tube (14) extending along a first axis, and arranged to communicate in use at each end with the conduit for fluid flow along the tube, an abutment surface (8, 49a, 73) adjacent one side of the outer wall of a portion of the length of the tube, and a pinch roller (1, 131) mounted eccentrically for rotation about a second axis non-parallel with the tube axis, adjacent the opposite side of the said outer wall of the said portion of the tube, the pinch roller being arranged progressively to pinch the tube at its said portion by deforming its wall progressively towards the abutment surface (8, 49a, 73) as a function of progressive rotation of the pinch roller about the second axis, the tube varying correspondingly progressively between being completely open and being pinched closed with its walls pinched in a predetermined plane parallel to the second axis; apparatus in which the abutment surface is the working surface of a second pinch roller (6) mounted for rotation on the opposite side of the predetermined plane of pinching so that the tube is pinched between the two pinch rollers, and in which the pinch rollers (1, 6) are of the same configuration and are mounted on parallel axes for contrary rotation, maintaining symmetry about the predetermined plane of pinching;
the apparatus being characterized in that the pinch roller is shaped and positioned such that, for the entire rotational range of operation, the part of its working surface facing the said predetermined plane of pinching is smoothly curved with a constant or slowly-varying radius of curvature, being convex in a section normal to the pinch roller axis, whereby the working surface, in use, engages and deforms the tube wall progressively with a smooth camming action, throughout the rotational range of operation, towards the predetermined plane with progressive rotation of the pinch roller.

2. Apparatus according to claim 1, in which the, or at least one, pinch roller comprises more than one working surface (22, 23) spaced axially along the roller, so as to pinch a corresponding number of tubes.

3. Apparatus according to Claim 2, in which the working surfaces are configured in relation to their angular position around the roller axis such as to pinch the rollers at predetermined different phases of roller rotation.

4. Apparatus according to any preceding claim, in which the, or at least one, pinch roller working surface (3) is continuous over its entire operational angular range.

5. Apparatus according to Claim 4, in which the pinch roller is an eccentrically-mounted cylinder (1) with a cut-out on one side of a central operative region of the roller leaving a waist portion whose perimeter in each transverse section consists of the remainder (4) of the arc of the cylinder, contiguous with a convex arc (3) defined by the cut-out.

6. Apparatus according to Claim 4 or 5, in which the pinch roller comprises guide track means (117-120) formed around its working surface for guiding each of the opposed folds of the tube wall (14) as the tube is pinched.

7. Apparatus according to Claim 6, in which the guide track means (117-120) comprises, at each axial boundary of the working surface, a radially-projecting track whose axial position varies progressively with angular position around the roller axis, to accommodate variation, with rotational position over its operating range, of the pinched width of the tube (14) in the predetermined plane of pinching.

8. A method of controlling the rate of fluid flow through a conduit (68, 80, 142), using a resilient deformable tube (14) extending along a first axis and communicating at each end with the conduit for fluid flow along the tube, an abutment surface (8, 49a, 73) adjacent one side of the outer wall of a portion of the length of the tube, and a pinch roller (1, 131) mounted eccentrically for rotation about a second axis non-parallel with the tube axis, adjacent the opposite side of the said outer wall of the said portion of the tube, comprising progressively varying the degree of pinching of the tube (14) at its said portion, and thereby the resistance to fluid flow to the conduit, by deforming the tube wall progressively towards or away from the abutment surface (8, 49a, 73) as a function of progressive rotation of the pinch roller about the second axis, the tube varying correspondingly progressively between being completely open and being pinched closed with its walls pinched in a predetermined plane parallel to the second axis; the abutment surface being the working surface of a second pinch roller (6) mounted for rotation on the opposite side of the predetermined plane of pinching so that the tube is pinched between the two pinch rollers, and the pinch rollers (1, 6) being of the same configuration and mounted on parallel axes for contrary rotation, maintaining symmetry about the predetermined plane of pinching; characterized in that the pinch roller is shaped and positioned such that, for the entire rotational range of operation, the part of its working surface facing the said predetermined plane of pinching is smoothly curved with a constant or slowly-varying radius of curvature, being convex in a section normal to the pinch roller axis, whereby the working surface engages and deforms the tube wall progressively with a smooth camming action, throughout the rotational range of operation, towards or away from the predetermined plane with progressive rotation of the pinch roller.

## Patentansprüche

1. Vorrichtung zur Regulierung der Geschwindigkeit eines Fluid-Stromes durch eine Leitung (68, 80, 142), die folgende Komponenten aufweist: ein elastisch verformbares Rohr (14), das sich längs einer ersten Achse erstreckt und so angeordnet ist, daß es bei der Nutzung an jedem Ende längs des Rohres für den Fluid-Strom mit der Leitung in Verbindung steht, eine Stoßfläche (8, 49a, 73), die an eine Seite der Außenwand eines Abschnitts der Länge des Rohres angrenzt, und eine Klemmrolle (1, 131), die exzentrisch zur Rotation um eine zweite Achse, die mit der Rohrachse nicht parallel ist, angrenzend an die gegenüberliegende Seite der Außenwand des Abschnitts des Rohres angeordnet ist, wobei die Klemmrolle so angeordnet ist, daß sie das Rohr an dem genannten Abschnitt progressiv durch Verformung von dessen Wand progressiv zur Stoßfläche (8, 49a, 73) hin als eine Funktion der progressiven Rotation der Klemmrolle um die zweite Achse zusammenpreßt, wobei das Rohr dementsprechend progressiv zwischen vollständig offen und vollständig zusammengepreßt, mit den Wänden in einer festgelegten Ebene parallel zu der zweiten Achse zusammengepreßt, variiert, eine Vorrichtung, bei der die Stoßfläche die Arbeitsfläche einer zweiten Klemmrolle (6) ist, die zur Rotation auf der gegenüberliegenden Seite der festgelegten Klemmebene angebracht ist, so daß das Rohr zwischen den beiden Klemmrollen zusammengepreßt wird, und bei der die Klemmrollen (1, 6) dieselbe Konfiguration haben und auf parallelen Achsen für eine gegenläufige Rotation angebracht sind, wobei die Symmetrie um die festgelegte Klemmebene bewahrt bleibt;
wobei die Vorrichtung dadurch gekennzeichnet ist, daß die Klemmrolle derartig geformt und positioniert ist, daß über dem gesamten Rotationsbereich der Funktion der Teil der Arbeitsfläche, der zu der festgelegten Klemmebene hin zeigt, stufenlos mit einem konstanten oder nur geringfügig variierenden Krümmungsradius, der in einem senkrecht zur Achse der Klemmrolle geführten Schnitt konvex ist, gekrümmt ist, wodurch die Arbeitsfläche bei der Nutzung in die Rohrwand eingreift und diese progressiv mit einer stufenlosen Nockenwirkung über dem gesamten Rotationsbereich der Funktion hin zu der festgelegten Ebene bei progressiver Rotation der Klemmrolle verformt wird.

2. Vorrichtung nach Anspruch 1, bei der die oder wenigstens eine Klemmrolle mehr als eine Arbeitsfläche (22, 23) aufweist, die im Abstand in der Längsrichtung auf der Rolle angeordnet sind, um so eine entsprechende Anzahl von Rohren zusammenzupressen.

3. Vorrichtung nach Anspruch 2, bei der die Arbeitsflächen im Verhältnis zu ihrer Winkelposition um die Rollenachse konfiguriert sind, derartig, daß sie die Rollen in festgelegten verschiedenen Phasen der Rotation der Rollen zusammenpressen.

4. Vorrichtung nach einem der vorhergehenden Ansprüche, bei der die oder wenigstens eine Arbeitsfläche (3) der Klemmrolle über dem gesamten operativen Winkelbereich durchgängig ist.

5. Vorrichtung nach Anspruch 4, bei der die Klemmrolle ein exzentrisch montierter Zylinder (1) mit einer Aussparung auf einer Seite eines zentralen Wirkungsbereichs der Rolle ist, wobei ein eingeschnürter Abschnitt bleibt, dessen Umfang in jedem Querschnitt aus dem Rest (4) des Bogens des Zylinders besteht, angrenzend an einen konvexen Bogen (3), der durch die Aussparung definiert ist.

6. Vorrichtung nach Anspruch 4 oder 5, bei der die Klemmrolle Führungsbahn-Mittel (117 bis 120) umfaßt, die um deren Arbeitsfläche gebildet werden, um jede der gegenüberliegenden Faltungen der Rohrwand (14) zu führen, wenn das Rohr zusammengepreßt wird.

7. Vorrichtung nach Anspruch 6, bei der das Führungsbahn-Mittel (117 bis 120) an jeder Axialbegrenzung der Arbeitsfläche eine radial vorstehende Spur aufweist, deren Axialposition progressiv mit der Winkelstellung um die Rollenaschse variiert, um bei Rotationspositionen über dem gesamten Arbeitsbereich Schwankungen der zusammengepreßten Breite des Rohres (14) in der festgelegten Klemmebene aufzunehmen.

8. Verfahren zur Regulierung der Geschwindigkeit eines Fluid-Stromes durch eine Leitung (68, 80, 142) unter Verwendung eines elastisch verformbaren Rohres (14), das sich längs einer ersten Achse erstreckt und an jedem Ende mit der Leitung für den Fluid-Strom in Verbindung steht, einer Stoßfläche (8, 49a, 73), die an eine Seite der Außenwand eines Abschnitts der Länge des Rohres angrenzt, und einer Klemmrolle (1, 131), die exzentrisch zur Rotation um eine zweite Achse, die mit der Rohrachse nicht parallel ist, angrenzend an die gegenüberliegende Seite der Außenwand des Abschnitts des Rohres angeordnet ist, das den Schritt der progressiven Veränderung des Grades des Zusammenpressens des Rohres (14) an dem genannten Abschnitt und damit des Fluid-Strom-Widerstandes gegenüber der Leitung durch Verformung der Rohrwand progressiv hin zu der Stoßfläche (8, 49a, 73) oder von dieser weg als eine Funktion der progressiven Rotation der Klemmrolle um die zweite Achse umfaßt, wobei das Rohr dementsprechend progressiv zwischen vollständig offen und vollständig zusammengepreßt, mit den Wänden in einer festgelegten Ebene parallel zu der zweiten Achse zusammengepreßt, variiert, wobei die Stoßfläche die Arbeitsfläche einer zweiten Klemmrolle (6) ist, die zur Rotation auf der gegenüberliegenden Seite der festgelegten Klemmebene angebracht ist, so daß das Rohr zwischen den beiden Klemmrollen zusammengedrückt wird, und wobei die Klemmrollen (1, 6) dieselbe Konfiguration haben und auf parallelen Achsen für eine gegenläufige Rotation angebracht sind, wobei die Symmetrie um die festgelegte Klemmebene bewahrt bleibt, dadurch gekennzeichnet, daß die Klemmrolle derartig geformt und positioniert ist, daß über dem gesamten Rotationsbereich der Funktion der Teil der Arbeitsfläche, der zu der festgelegten Klemmebene hin zeigt, stufenlos mit einem konstanten oder nur geringfügig variierenden Krümmungsradius, der in einem senkrecht zur Achse der Klemmrolle geführten Schnitt konvex ist, gekrümmt ist, wodurch die Arbeitsfläche in die Rohrwand eingreift und diese über dem gesamten Rotationsbereich der Funktion bei fortschreitender Rotation der Klemmrolle progressiv mit einer stufenlosen Nockenwirkung zu der festgelegten Ebene hin oder von dieser weg verformt.

## Revendications

1. Dispositif de commande du débit d'un fluide traversant un conduit (68, 80, 142), comprenant un tuyau à déformation élastique (14) s'étendant le long d'un premier axe, et agencé de sorte à communiquer en service au niveau de chaque extrémité avec le conduit en vue de l'écoulement du fluide le long du tuyau, une surface de butée (8, 49a, 73) adjacente à un côté ce la paroi externe d'une partie de la longueur du tuyau, et un rouleau de serrage (1, 131) monté de façon excentrique en vue de sa rotation autour d'un deuxième axe non parallèle à l'axe du tuyau, adjacent au côté opposé de ladite paroi externe de ladite partie du tuyau, le rouleau de serrage étant agencé de sorte à serrer progressivement le tuyau au niveau de sa dite partie par déformation progressive de sa paroi en direction de la surface de butée (8, 49a, 73), par suite de la rotation progressive du rouleau de serrage autour du deuxième axe, le tuyau étant modifié progressivement et de façon correspondante entre un état complètement ouvert et un état de serrage fermé, ses parois étant serrées dans un plan prédéterminé parallèle au deuxième axe; dispositif dans lequel la surface de butée constitue la surface de travail d'un deuxième rouleau de serrage (6), monté de sorte à tourner sur le côté opposé du plan de serrage prédéterminé, de sorte que le tuyau est serré entre les deux rouleaux de serrage, les rouleaux de serrage (1, 6) ayant la même configuration et étant montés sur des axes parallèles en vue d'une rotation contraire, maintenant la symétrie autour du plan de serrage prédéterminé;
le dispositif étant caractérisé en ce que le rouleau de serrage est formé et positionné de sorte que pour l'ensemble de l'intervalle de rotation opérationnelle, la partie de sa surface de travail faisant face audit plan prédéterminé de serrage est légèrement courbée, avec un rayon de courbure constant ou à faible variation, avec une section convexe perpendiculaire à l'axe du rouleau de serrage, la surface de travail s'engageant ainsi en service progressivement dans la paroi du tuyau et déformant celle-ci par une légère action de came, à travers l'intervalle de rotation opérationnelle, vers le plar prédéterminé, avec une rotation progressive du rouleau de serrage.

2. Dispositif selon la revendication 1, dans lequel le ou au moins un rouleau de serrage comprend plus d'une surface de travail (22, 23) espacées axialement le long du rouleau, de sorte à assurer le serrage d'un nombre correspondant de tuyaux.

3. Dispositif selon la revendication 2, dans lequel les surfaces de travail sont configurées par rapport à leur position angulaire autour de l'axe du rouleau de sorte à assurer le serrage des rouleaux en différentes phases prédétermines de la rotation du rouleau.

4. Dispositif selon l'une quelconque des revendications précédentes, dans lequel la ou au moins une surface de travail du rouleau de serrage (3) est continue sur l'ensemble de son intervalle angulaire opérationnel.

5. Dispositif selon la revendication 4, dans lequel le rouleau de serrage est un rouleau à montage excentrique (1) comportant une entaille sur un côté d'une région opérationnelle centrale du rouleau définissant une partie centrale dont le périmètre dans chaque section transversale est composé du restant (4) de l'arc du rouleau, contigu à un arc convexe (3) défini par l'entaille.

6. Dispositif selon les revendications 4 ou 5, dans lequel le rouleau de serrage comprend un moyen de piste de guidage (117-120) agencé autour de sa surface de travail pour guider chacun des plis opposés de la paroi du tuyau (14) lors du serrage du tuyau.

7. Dispositif selon la revendication 6, dans lequel le moyen de piste de guidage (117-120) comprend au niveau de chaque limite axiale de la surface de travail une piste à débordement radial dont la position axiale varie progressivement en fonction de la position angulaire autour de l'axe du rouleau, en vue de l'adaptation à la variation, avec la position de rotation au cours de son intervalle opérationnel, de la largeur de serrage du tuyau (14) dans le plan de serrage prédéterminé.

8. Procédé de commande du débit de l'écoulement d'un fluide à travers un conduit (68, 80, 142), utilisant un tuyau à déformation élastique (14), s'étendant le long d'un premier axe et communiquant au niveau de chaque extrémité avec le conduit en vue de l'écoulement du fluide le long du tuyau, une surface de butée (8, 49a, 73) près d'un côté de la paroi externe d'une partie de la longueur du tuyau, et un rouleau de serrage (1, 131) monté de façon excentrique en vue de la rotation autour d'un deuxième axe, non parallèle à l'axe du tuyau, adjacent au côté opposé de ladite paroi externe de ladite partie du tuyau, comprenant la variation progressive du degré de serrage du tuyau (14) au niveau de sa dite partie, et par suite de la résistance à l'écoulement du fluide vers le conduit, par déformation progressive de la paroi du tuyau dans la direction de la surface de butée (8, 49a, 73) ou dans la direction opposée, par suite de la rotation progressive du rouleau de serrage autour du deuxième axe, le tuyau subissant une variation progressive correspondante entre un état complètement ouvert et une fermeture par serrage, ses parois étant serrées dans un plan prédéterminé parallèle au deuxième axe; la surface de butée constituant la surface de travail d'un deuxième rouleau de serrage (6) monté er vue d'une rotation sur le côté opposé du plan de serrage prédéterminé, de sorte que le tuyau est serré entre les deux rouleaux de serrage, et les rouleaux de serrage (1, 6) ayant la même configuration et étant montés sur des axes parallèles en vue d'une rotation contraire, maintenant la symétrie autour du plan de serrage prédéterminé; caractérisé en ce que le rouleau de serrage est formé et positionné de sorte que dans l'ensemble de l'intervalle de rotation opérationnelle la partie de sa surface de travail faisant face audit plan de serrage prédéterminé est légèrement courbée, avec un rayon de courbure constant ou à faible variation, convexe dans une section perpendiculaire à l'axe du rouleau de serrage, la surface de travail s'engageant ainsi progressivement dans la paroi du tuyau et déformant celle-ci avec une légère action de came, dans l'intervalle de rotation opérationnelle, en direction du plan prédéterminé ou dans une direction opposée, avec une rotation progressive du rouleau de serrage.
